# EUROPÄISCHE PATENTSCHRIFT

(11) **EP 2 317 834 B1**
(45) Veröffentlichungstag und Bekanntmachung des Hinweises auf die Patenterteilung: **27.12.2017**
(21) Anmeldenummer: 09778146.2
(22) Anmeldetag: 27.08.2009
(51) Int. Cl.: A01G 9/20

(54) **FRÜHBEETKASTEN**
COLD FRAME
CHÂSSIS DE COUCHE

(30) Priorität: 29.08.2008 AT 13482008
(43) Veröffentlichungstag der Anmeldung: 11.05.2011
(73) Patentinhaber: Wüster, Heinrich, 6460 Imst/Tirol (AT)
(72) Erfinder: Wüster, Heinrich, 6460 Imst/Tirol (AT)
(74) Vertreter: Puchberger & Partner Patentanwälte
(86) Internationale Anmeldenummer: PCT/EP2009/006208
(87) Internationale Veröffentlichungsnummer: WO 2010/022940

(56) Entgegenhaltungen:
- EP-A- 0 063 215
- CH-A- 555 134
- FR-A- 2 538 215
- FR-A- 2 910 083
- GB-A- 1 280 820

## Beschreibung

Die Erfindung betrifft einen Frühbeetkasten mit Seitenwandelementen, die hochtransparente Hohlkammerplatten enthalten, und Stehern, die mit seitlichen Flanschen versehen sind, wobei die Seitenwandelemente von ihren Hohlkammerplatten gebildete, mit Durchgangslöchern versehene, seitliche Randbereiche besitzen, die an den Flanschen der Steher anliegen.

### Stand der Technik

Aus der EP 0 063 215 A2 ist ein als Frühbeet zu verwendender, kastenförmiger Behälter bekannt. Bei diesem sind die von hochtransparenten Hohlkammerplatten gebildeten Seitenwände mit den Stehern durch zahlreiche Steckvorrichtungen verbunden, die zum einen aus locker ineinander steckbaren Einzelteilen bestehen und zum anderen die in den Randbereichen der Hohlkammerplatten und in den Flanschen der Steher vorgesehenen, übereinander liegenden Durchgangslöcher durchsetzen. Beim Zusammenbau des Behälters werden die Steckvorrichtungen in die übereinander liegenden Durchgangslöcher der Hohlkammerplatten und Flansche eingesetzt und dabei aus ihren Einzelteilen zusammengesteckt. Beim Zerlegen des Behälters werden die Steckvorrichtungen in ihre Einzelteile zerlegt und die Seitenwände und die Steher von einander getrennt. Dabei muss sorgsam darauf geachtet werden, dass bei den vielen, in ihre Einzelteile zerlegten Steckvorrichtungen kein Einzelteil verloren geht, damit beim späteren Zusammenbau des Behälters wieder ein vollständiger Behälter entstehen kann. Während der Lagerung des zerlegten Behälters müssen die in ihre Einzelteile zerlegten Steckvorrichtungen sorgsam aufbewahrt werden, damit sie beim Zusammenbau des Behälter auch tatsächlich zur Verfügung stehen. Nachteilig ist, dass, neben der Vielzahl an sorgsam zu verwahrenden Einzelteilen der vielen Steckvorrichtungen des Behälters, die zusammengesteckten Steckvorrichtungen, wegen des für das Ineinanderstecken ihrer Einzelteile erforderlichen Bewegungsspieles, in sich geringfügig beweglich sind, weshalb die Seitenwände des Behälters etwas wackelig mit den Stehern verbunden sind, was sich beim Versetzen des Frühbeetkastens an einen anderen Ort im Garten unliebsam bemerkbar macht.

### Zusammenfassung der Erfindung

Aufgabe der Erfindung ist es, einen verbesserten Frühbeetkasten anzugeben. Das Ziel der vorliegenden Erfindung wird mit einem Frühbeetkasten gemäß dem unabhängigen Anspruch gelöst. Dies wird bei einem Frühbeetkasten der eingangs genannten Art erfindungsgemäß dadurch erreicht, dass die Seitenwandelemente mit den Stehern verbindende Klemmvorrichtungen vorgesehen sind, deren Klemmelemente an den Innenseiten der die Randbereiche der Seitenwandelemente bildenden Hohlkammerplatten anliegen und zwischen den Hohlkammerplatten und den Köpfen von zu den Klemmvorrichtungen gehörenden Positionsstiften eingeklemmt sind, die aus den Durchgangslöchern der Hohlkammerplatten vorstehen und mit den Flanschen der Steher starr verbunden sind.

Beim erfindungsgemäßen Frühbeetkasten sind die Seitenwandelemente mit den Stehern durch die Klemmvorrichtungen stabil und trotzdem leicht lösbar verbunden. Die Klemmelemente der Klemmvorrichtungen sind zwischen den Köpfen der Positionsstifte und den Hohlkammerplatten eingeklemmt und drücken die Hohlkammerplatten mit ihren Außenseiten an den Flanschen der Steher an. Zum Herstellen der stabilen Verbindungen werden die Klemmelemente der Klemmvorrichtungen zwischen den Köpfen der aus den Durchgangslöchern der Hohlkammerplatten vorstehenden Positionsstifte und den Innenseiten der Hohlkammerplatten eingeklemmt. Zum Lösen der stabilen Verbindungen werden die Klemmelemente der Klemmvorrichtungen zwischen den Köpfen der Positionsstifte und den Innenseiten der Hohlkammerplatten herausgezogen. Die in den Durchgangslöchern der Hohlkammerplatten angeordneten und über die Innenseiten der Hohlkammerplatten vorstehenden Positionsstifte sind mit den Flanschen der Steher starr verbunden und können während der Lagerung des zerlegten Frühbeetkasten nicht verloren gehen.

Erfindungsgemäß kann jede Klemmvorrichtung aus einem mit einem Flansch eines Stehers starr verbundenen, mit seinem Kopf aus einem Durchgangsloch einer Hohlkammerplatte vorstehenden Positionsstift und aus einem Klemmelement bestehen, das zwischen dem Kopf des Positionsstiftes und der Innenseite der Hohlkammerplatte eingeklemmt ist.

Erfindungsgemäß kann bei einer zwei Seitenwandelemente mit einem Steher verbindenden Klemmvorrichtung ein Klemmelement vorgesehen sein, das bei beiden Seitenwandelementen an den Innenseiten der Hohlkammerplatten anliegt und zwischen den Hohlkammerplatten und den Köpfen von über die Hohlkammerplatten vorstehenden Positionsstiften eingeklemmt ist. Diese Ausbildung erlaubt es, die beiden Seitenwandelemente durch das Einsetzen eines einzelnen Klemmelementes mit dem zwischen ihnen angeordneten Steher stabil zu verbinden.

Gemäß einem weiteren Merkmal der Erfindung kann vorgesehen sein, dass bei einem zwischen zwei Seitenwandelementen angeordneten Steher eine den Steher mit beiden Seitenwandelementen verbindende Klemmvorrichtung vorgesehen ist, die mit einem Klemmelement versehen ist, das zwei Klemmschenkel besitzt, die jeweils an der Innenseite der Hohlkammerplatte eines Seitenwandelementes anliegen und zwischen der Hohlkammerplatte und einem Kopf eines aus einem Durchgangsloch der Hohlkammerplatte vorstehenden Positionsstiftes eingeklemmt sind.

Erfindungsgemäß kann bei einem Steher mit zwei senkrecht zueinander angeordneten Flanschen eine Klemmvorrichtung vorgesehen sein, die ein Klemmelement mit zwei senkrecht zueinander angeordneten Klemmschenkeln besitzt, die jeweils zwischen einer Hohlkammerplatte und einem Kopf eines aus einem Durchgangsloch der Hohlkammerplatte vorstehenden Positionsstiftes eingeklemmt sind.

Weiters kann erfindungsgemäß vorgesehen sein, dass die Positionsstifte mit flachen Stegen über die Innenseiten der Hohlkammerplatten vorstehen, die an den Flanschen der Steher anliegen, dass die Positionsstifte an ihren freien Enden Köpfe tragen und dass die an den Innenseiten der Hohlkammerplatten anliegenden Klemmelemente zwischen den Hohlkammerplatten und den Köpfen der Positionsstifte eingeklemmt sind.

Erfindungsgemäß können die Klemmelemente mit Längsschlitzen versehen sein, in denen die von den flachen Stegen der Positionsstifte gebildeten Hälse der Positionsstifte aufgenommen sind, und die Klemmelemente können mit die Köpfe der Positionsstifte untergreifenden Klemmabschnitten versehen sein.

Die Längsschlitze der Klemmelemente können keilförmig ausgebildet und am offenen Ende breiter als am geschlossenen Ende sein.

Erfindungsgemäß können die mit Längsschlitzen versehenen Klemmelemente quer zu den Positionsstiften auf die über die Innenseiten der Hohlkammerplatten vorstehenden Positionsstifte aufschiebbar und dabei mit ihren Klemmabschnitten zwischen den Hohlkammerplatten und den Köpfen der Positionsstifte einklemmbar sein.

Erfindungsgemäß können die Positionsstifte mit den Flanschen der Steher einstückig ausgebildet sein. Die Positionsstifte können an die Flansche der Steher angeformt sein. Nachstehend wird die Erfindung anhand der Zeichnungen näher erläutert.

### Kurze Beschreibung der Zeichnungen

In den Zeichnungen zeigen:
- Fig. 1: schematisch einen Frühbeetkasten von oben,
- Fig. 2: schematisch die Innenseite einer Ecke des Frühbeetkastens,
- Fig. 3: einen Teil eines Stehers und eine neben diesem angeordnete Hohlkammerplatte,
- Fig. 4: einen Teil eines Stehers und eine an diesem fixierte Hohlkammerplatte,
- Fig. 5: ein Klemmelement, und
- Fig. 6: eine Ecke des Frühbeetkastens von unten.

### Beschreibung von Ausführungsbeispielen

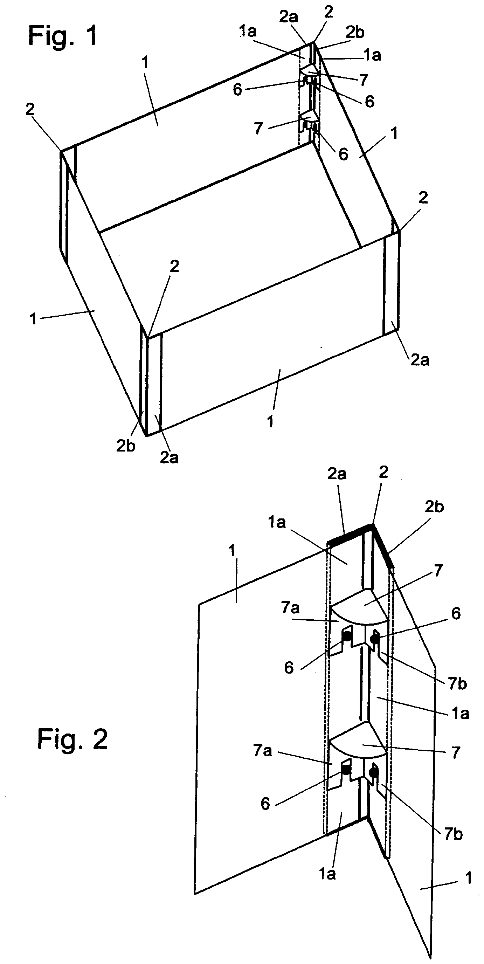

Die Fig. 1 zeigt einen Frühbeetkasten mit vertikal angeordneten Seitenwandelementen 1 und vertikalen Stehern 2. Die Seitenwandelemente 1 liegen mit ihren seitlichen Randbereichen 1a an den seitlichen Flanschen 2a, 2b der Steher 2 an. Die Seitenwandelemente 1 sind mit hochtransparenten Hohlkammerplatten 3 versehen, die in den seitlichen Randbereichen 1a der Seitenwandelemente 1 zwei durch einen größere Abstand getrennte Durchgangslöcher 4 enthalten. Die Flansche 2a, 2b der Steher 2 tragen senkrecht abstehende Positionsstifte 5, die in den Durchgangslöchern 4 der Hohlkammerplatten 3 angeordnet sind und mit ihrem Köpfen 6 über die Hohlkammerplatten 3 vorstehen. Zwischen den Köpfen 6 der Positionsstifte 5 und den Hohlkammerplatten 3 der Seitenwandelemente 1 sind Klemmelemente 7 eingeklemmt, die die Hohlkammerplatten 3 an den Flanschen 2a, 2b der Steher 2 andrücken. Die Seitenwandelemente 1 sind mit den Stehern 2 durch Klemmvorrichtungen stabil verbunden, die jeweils aus einem Positionsstift 5 und einem Klemmelement 7 bestehen. Der Positionsstift 5 ist mit einem Flansch 2a, 2b eines Stehers 2 starr verbunden und steht mit seinem Kopf 6 über die Innenseite einer Hohlkammerplatte 3 vor. Das Klemmelement 7 liegt an der Innenseite der Hohlkammerplatte 3 an und ist zwischen dieser und dem Kopf 6 des Positionsstiftes 5 eingeklemmt.

Von den beiden Flanschen 2a, 2b der Steher 2 stehen jeweils zwei auf gleicher Höhe angeordnete Positionsstifte 5 ab, die mit ihrem Köpfen 6 jeweils über eine an dem betreffenden Flansch 2a, 2b anliegende Hohlkammerplatte 3 vorstehen. Für die beiden, auf der gleichen Höhe angeordneten Positionsstifte 5 ist ein gemeinsames Klemmelement 7 vorgesehen, das zwei Klemmschenkel 7a, 7b besitzt, die jeweils einem Flansch 2a, 2b des Stehers 2 zugeordnet sind und zwischen der an diesem Flansch 2a, 2b anliegenden Hohlkammerplatte 3 und dem Kopf 6 des über diese Hohlkammerplatte 3 vorstehenden Positionsstiftes 5 eingeklemmt ist.

Die Positionsstifte 6 weisen jeweils drei, in Längsrichtung der Positionsstifte 5 aufeinanderfolgende Abschnitte auf. Einen Basisabschnitt 8, der vom betreffenden Flansch 2a, 2b des Stehers 2 senkrecht absteht. Einen an den Basisabschnitt 8 anschließenden flachen Steg 9. Dieser bildet den mit zwei seitlichen Einschnürungen versehenen Hals des Positionsstiftes 5. Der Steg 9 steht über die Innenseite der am Flansch 2a, 2b anliegenden Hohlkammerplatte 3 vor. An den Steg 9 schließt der Kopf 6 des Positionsstiftes 5 an. Der Kopf 6 ist mit Abstand über der Innenseite der Hohlkammerplatte 3 angeordnet und steht über die beiden Seitenflächen des flachen Steges 9 jeweils seitlich vor. Das zwischen dem Kopf 6 des Positionsstiftes 5 und der Hohlkammerplatte 3 eingeklemmte Klemmelement 7 untergreift den Kopf 6 des Positionsstiftes 5 mit einem Klemmabschnitt, der bis nahe an den flachen Steg 9 des Positionsstiftes 5 und dessen Seitenfläche heranreicht.

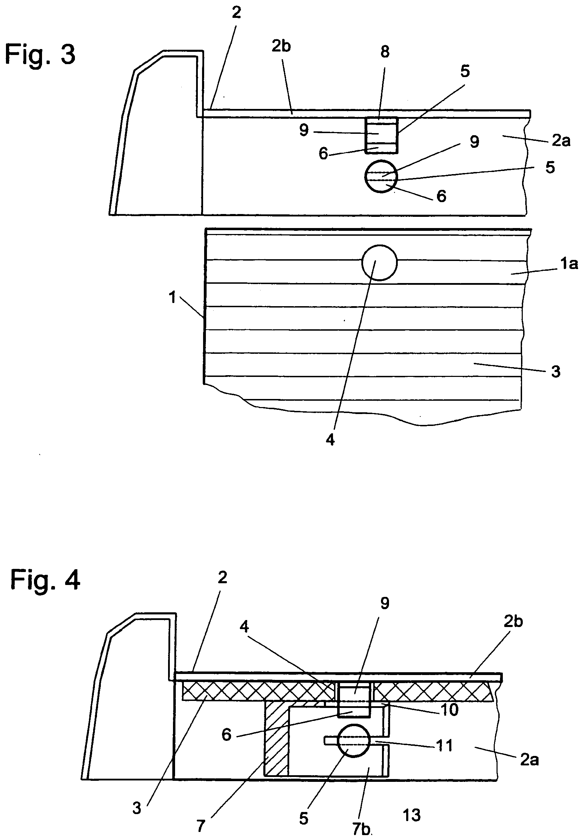

Fig. 3 zeigt obere Hälfte eines Stehers 2 mit einem in der Zeichnung liegend dargestellten, ersten Flansch 2a und einem in Zeichnung stehend dargestellten, zweiten Flansch 2b. Bei beiden Flanschen 2a, 2b ist auf gleicher Höhe jeweils ein vom Flansch 2a, 2b senkrecht abstehender Positionsstift 5 vorgesehen. Die beiden Positionsstifte 5 weisen jeweils einen an den Flansch 2a, 2b anschließenden Basisabschnitt 8, einen an den Basisabschnitt 8 anschließenden, flachen Steg 9 und einen an den flachen Steg 9 anschließenden Kopf 6 auf. Neben dem ersten Flansch 2a ist eine Hohlkammerplatte 3 eines Seitenwandelementes 1 dargestellt Im seitlichen Randbereich 1a des Seitenwandelementes 1 ist die Hohlkammerplatte 3 mit einem Durchgangsloch 4 versehen. Beim Zusammenbau des Frühbeetkastens wird das Seitenwandelement 1 mit seinem seitlichen Randbereich 1a auf die Innenseite des ersten Flansches 2a aufgelegt. Dabei wird die Hohlkammerplatte 3 mit ihrem Durchgangsloch 4 über den Positionsstift 5 des ersten Flansches 2a geschoben. Wenn die Hohlkammerplatte 3 auf dem ersten Flansch 2a aufliegt, steht der Positionsstift 5 mit seinem Kopf 6 über die Innenseite der Hohlkammerplatte 3 vor.

Fig. 4 zeigt die obere Hälfte eines Stehers 2 mit einer an dem in der Zeichnung stehend dargestellten, zweiten Flansch 2b festgeklemmten Hohlkammerplatte 3. Die an dem in der Zeichnung liegend dargestellten, ersten Flansch 2a festgeklemmte Hohlkammerplatte ist in Fig. 4, der besseren Übersichtlichkeit halber, nicht dargestellt.

Die Hohlkammerplatte 3 liegt an der Vorderseite des Flansches 2b an. Der Positionsstift 5 des zweiten Flansches 2b steht durch das Durchgangsloch 4 der Hohlkammerplatte 3 hindurch über deren Innenseite vor. Der Basisabschnitt 8 des Positionsstiftes 5 ist vollständig innerhalb des Durchgangsloches 4 der Hohlkammerplatte 3 angeordnet. Der an den Basisabschnitt 8 anschließende, flache Steg 9 des Positionsstiftes 5 steht über die Innenseite der Hohlkammerplatte 3 vor. Der Kopf des Positionsstiftes 5 ist knapp über der Innenseite der Hohlkammerplatte 3 angeordnet. Zwischen der Innenseite der Hohlkammerplatte 3 und dem Kopf des Positionsstiftes 5 ist ein Klemmschenkel 7a des Klemmelementes 7 eingeklemmt.

Das Klemmelement 7 besitzt zwei winkelig zueinander angeordnete Klemmschenkel 7a, 7b. In beiden ist jeweils ein Längsschlitz 10, 11 vorgesehen, der von zwei Klemmabschnitten 12 bzw. 13 seitlich begrenzt wird. Im Längsschlitz 10, 11 ist ein vom jeweiligen Flansch 2a, 2b abstehender Positionsstift 5 mit seinem flachen Steg 9 aufgenommen. Die den Längsschlitz 10 bzw. 11 begrenzenden Klemmabschnitte 12 bzw. 13 untergreifen den Kopf 6 des Positionsstiftes 5. Die Klemmabschnitte 12 bzw. 13 der beiden Klemmschenkel 7a, 7b sind jeweils zwischen dem Kopf 6 des Positionsstiftes 5 und der an der Unterseite des Klemmschenkels 7a, 7b angeordneten Hohlkammerplatte 3 eingeklemmt.

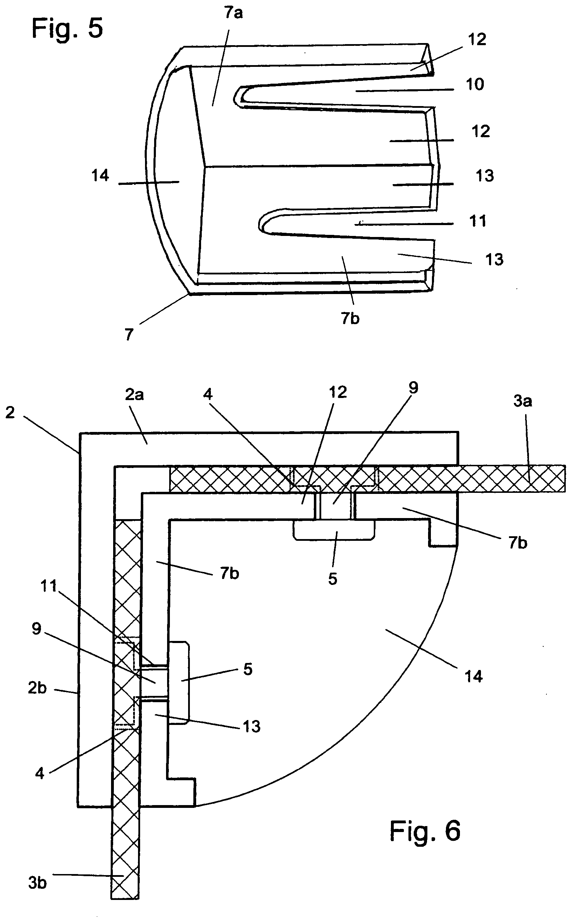

Fig. 5 zeigt eine Ausführungsform des Klemmelementes 7 mit zwei senkrecht zueinander angeordneten Klemmschenkeln 7a, 7b, die jeweils mit einem Längsschlitz 10 bzw. 11 versehen sind. Die beiden Längsschlitze 10, 11 sind am unteren Rand des Klemmelementes 7 offen. Die beiden Längsschlitze 10, 11 sind keilförmig ausgebildet und am offenen unteren Ende breiter als am oberen geschlossenen Ende. Die beiden Klemmschenkel 7a, 7b sind am oberen Rand des Klemmelementes 7 durch eine Querwand 14 verbunden.

Fig. 6 zeigt eine Ecke des Frühbeetkastens von unten. Der Steher 2 besitzt zwei senkrecht zueinander angeordnete Flansche 2a, 2b. Von diesen stehen auf gleicher Höhe angeordnete Positionsstifte 5 nach innen ab. An den Innenseiten der beiden Flansche 2a, 2b liegt jeweils der von eine Hohlkammerplatte 3a, 3b gebildete, seitliche Randbereich eines Seitenwandelementes 1 an. Die Positionsstifte 5 durchsetzen die Hohlkammerplatten 3a, 3b in einem Durchgangsloch 4. Die Positionsstifte 5 stehen mit ihren flachen Stegen 9 über die Innenseiten der Hohlkammerplatten 3a, 3b vor. Zwischen den im Abstand von den Hohlkammerplatten 3a, 3b angeordneten Köpfen 6 der Positionsstifte 5 und den Hohlkammerplatten 3a, 3b sind die Klemmschenkel 7a, 7b des Klemmelementes 7 eingeklemmt.

Die Positionsstifte 5 sind mit den Flanschen 2a, 2b der Steher 2 starr verbunden. Die Positionsstifte 5 können mit den Flanschen 2a, 2b einstückig ausgebildet oder an diese angeformt sein. Vorzugsweise ist der Steher 2 mit seinen beiden Flanschen 2a, 2b und mit den von diesen abstehenden Positionsstiften 5 als Spritzgussteil ausgebildet.

## Patentansprüche

1. Frühbeetkasten mit Seitenwandelementen (1), die hochtransparente Hohlkammerplatten (3, 3a, 3b) enthalten, und Stehern (2), die mit seitlichen Flanschen (2a, 2b) versehen sind, wobei die Seitenwandelemente (1) von ihren Hohlkammerplatten (3, 3a, 3b) gebildete, mit Durchgangslöchern (4) versehene, seitliche Randbereiche (1a) besitzen, die an den Flanschen (2a, 2b) der Steher (2) anliegen,
- wobei die Seitenwandelemente (1) mit den Stehern (2) verbindende Klemmvorrichtungen vorgesehen sind, deren Klemmelemente (7) an den Innenseiten der die Randbereiche (1a) der Seitenwandelemente (1) bildenden Hohlkammerplatten (3, 3a, 3b) anliegen und zwischen den Hohlkammerplatten (3, 3a, 3b) und den Köpfen (6) von zu den Klemmvorrichtungen gehörenden Positionsstiften (5) eingeklemmt sind, die aus den Durchgangslöchern (4) der Hohlkammerplatten (3, 3a, 3b) vorstehen und mit den Flanschen (2a, 2b) der Steher (2) verbunden sind,
- dass die Positionsstifte (5) mit flachen Stegen (9) über die Innenseiten der Hohlkammerplatten (3, 3a, 3b) vorstehen, die an den Flanschen (2a, 2b) der Steher (2) anliegen, dass die Positionsstifte (5) an ihren freien Enden Köpfe (6) tragen, und dass die an den Innenseiten der Hohlkammerplatten (3, 3a, 3b) anliegenden Klemmelemente (7) zwischen den Hohlkammerplatten (3, 3a, 3b) und den Köpfen (6) der Positionsstifte (5) eingeklemmt sind,
- und dass die Klemmelemente (7) mit Längsschlitzen (10, 11) versehen sind, in denen die von den flachen Stegen (9) der Positionsstifte (5) gebildeten Hälse der Positionsstifte (5) aufgenommen sind, und dass die Klemmelemente (7) mit die Köpfe (6) der Positionsstifte (5) untergreifenden Klemmabschnitten (12, 13) versehen sind,
**dadurch gekennzeichnet,**
**dass** die Verbindung der Positionsstifte (5) mit den Flanschen (2a, 2b) der Steher (2) starr ist.

2. Frühbeetkasten nach Anspruch 1, ***dadurch gekennzeichnet,* dass** bei einer zwei Seitenwandelemente (1) mit einem Steher (2) verbindenden Klemmvorrichtung ein Klemmelement (7) vorgesehen ist, das bei beiden Seitenwandelementen (1) an den Innenseiten der Hohlkammerplatten (3, 3a, 3b) anliegt und zwischen den Hohlkammerplatten (3, 3a, 3b) und den Köpfen (6) von über die Hohlkammerplatten (3, 3a, 3b) vorstehenden Positionsstiften (5) eingeklemmt ist.

3. Frühbeetkasten nach Anspruch 1, ***dadurch gekennzeichnet,* dass** bei einem zwischen zwei Seitenwandelementen (1) angeordneten Steher (2) eine den Steher (2) mit beiden Seitenwandelementen (1) verbindende Klemmvorrichtung vorgesehen ist, die mit einem Klemmelement (7) versehen ist, das zwei Klemmschenkel (7a, 7b) besitzt, die jeweils an der Innenseite der Hohlkammerplatte (3, 3a, 3b) eines Seitenwandelementes (1) anliegen und zwischen der Hohlkammerplatte (3, 3a, 3b) und einem Kopf (6) eines aus einem Durchgangsloch (4) der Hohlkammerplatte (3, 3a, 3b) vorstehenden Positionsstiftes (5) eingeklemmt sind.

4. Frühbeetkasten nach Anspruch 3, ***dadurch gekennzeichnet,* dass** bei einem Steher (2) mit zwei senkrecht zueinander angeordneten Flanschen (2a, 2b) eine Klemmvorrichtung vorgesehen ist, die ein Klemmelement (7) mit zwei senkrecht zueinander angeordneten Klemmschenkeln (7a, 7b) besitzt, die jeweils zwischen einer Hohlkammerplatte (3, 3a, 3b) und einem Kopf (6) eines aus einem Durchgangsloch (4) der Hohlkammerplatte (3, 3a, 3b) vorstehenden Positionsstiftes (5) eingeklemmt sind.

5. Frühbeetkasten nach Anspruch 4, ***dadurch gekennzeichnet,* dass** das mit zwei senkrecht zueinander angeordneten Klemmschenkeln (7a, 7b) versehene Klemmelement (7) eine die beiden Klemmschenkeln (7a, 7b) miteinander verbindende, als Versteifung ausgebildete Querwand (14) besitzt.

6. Frühbeetkasten nach einem der Ansprüche 1 bis 5, ***dadurch gekennzeichnet,* dass** die Längsschlitze (10, 11) der Klemmelemente (7) keilförmig ausgebildet sind und am offenen Ende breiter sind als am geschlossenen Ende.

7. Frühbeetkasten nach einem der Ansprüche 1 bis 6, ***dadurch gekennzeichnet,* dass** die mit Längsschlitzen (10, 11) versehenen Klemmelemente (7) quer zu den Positionsstiften (5) auf die über die Innenseiten der Hohlkammerplatten (3, 3a, 3b) vorstehenden Positionsstifte (5) aufschiebbar und dabei mit ihren Klemmabschnitten (12, 13) zwischen den Hohlkammerplatten (3, 3a, 3b) und den Köpfen (6) der Positionsstifte (5) einklemmbar sind.

8. Frühbeetkasten nach einem der Ansprüche 1 bis 7, ***dadurch gekennzeichnet,* dass** die Positionsstifte (5) mit den Flanschen (2a, 2b) der Steher (2) einstückig ausgebildet sind.

9. Frühbeetkasten nach Anspruch 8, ***dadurch gekennzeichnet,* dass** die Positionsstifte (5) an die Flansche (2a, 2b) der Steher (2) angeformt sind.

## Claims

1. A cold frame, comprising side wall elements (1) which contain highly transparent hollow chamber panels (3, 3a, 3b) and uprights (2) provided with lateral flanges (2a, 2b), wherein the side wall elements (1) have lateral edge regions (1a) formed by the hollow chamber panels (3, 3a, 3b) thereof, and provided with through holes (4), which abut against the flanges (2a, 2b) of the uprights (2),
wherein clamping devices which connect the side wall elements (1) to the uprights (2) are provided, the clamping elements (7) of which abut against the inner sides of the hollow chamber panels (3, 3a, 3b) forming the edge regions (1a) of the side wall elements (1) and are clamped between the hollow chamber panels (3, 3a, 3b) and the heads (6) of positioning pins (5) pertaining to the clamping devices, which project out of the through holes (4) of the hollow chamber panels (3, 3a, 3b) and are connected to the flanges (2a, 2b) of the uprights (2),
- that the positioning pins (5) project with flat webs (9) beyond the inner sides of the hollow chamber panels (3, 3a, 3b), which abut against the flanges (2a, 2b) of the uprights (2), that the positioning pins (5) carry heads (6) at the free ends thereof, and that the clamping elements (7) that abut against the inner sides of the hollow chamber panels (3, 3a, 3b) are clamped between the hollow chamber panels (3, 3a, 3b) and the heads (6) of the positioning pins (5),
- and that the clamping elements (7) are provided with elongate slots (10, 11), in which the necks formed by the flat webs (9) of the positioning pins (5) are received and that the clamping elements (7) are provided with clamping sections (12, 13) reaching underneath the heads (6) of the positioning pins (5),
**characterized in** the connection of the positioning pins (5) to the flanges (2a, 2b) of the uprights (2) is rigid.

2. The cold frame according to claim 1, **characterized in that** in a clamping device which connects two side wall elements (1) to an upright (2), a clamping element (7) is provided which abuts against the inner sides of the hollow chamber panels (3, 3a, 3b) on both side wall elements (1) and is clamped between the hollow chamber panels (3, 3a, 3b) and the heads (6) of positioning pins (5) that project beyond the hollow chamber panels (3, 3a, 3b).

3. The cold frame according to claim 1, **characterized in that** in one upright (2) disposed between two side wall elements (1), a clamping device which connects the upright (2) to both side wall elements (1) is provided, which is provided with a clamping element (7) which has two clamping limbs (7a, 7b) which each abut against the inner side of the hollow chamber panel (3, 3a, 3b) of a side wall element (1) and are clamped between the hollow chamber panel (3, 3a, 3b) and a head (6) of a positioning pin (5) projecting out of a through hole (4) of the hollow chamber panel (3, 3a, 3b).

4. The cold frame according to claim 3, **characterized in that** in an upright (2) with two flanges (2a, 2b) arranged perpendicular to one another, a clamping device is provided which has a clamping element (7) with two clamping limbs (7a, 7b) arranged perpendicular to one another, which are each clamped between a hollow chamber panel (3, 3a, 3b) and a head (6) of a positioning pin (5) projecting out of a through hole (4) of the hollow chamber panel (3, 3a, 3b) .

5. The cold frame according to claim 4, **characterized in that** the clamping element (7) provided with two clamping limbs (7a, 7b) arranged perpendicular to one another has a transverse wall (14) configured as a reinforcement which connects the two clamping limbs (7a, 7b) to one another.

6. The cold frame according to any one of claims 1 to 5, **characterized in that** the elongate slots (10, 11) of the clamping elements (7) are configured to be wedge-shaped and are wider at the open end than at the closed end.

7. The cold frame according to according to any one of claims 1 to 6, **characterized in that** the clamping elements (7) provided with elongate slots (10, 11) can be slid onto the positioning pins (5) that project beyond the inner sides of the hollow chamber panels (3, 3a, 3b) transversely to the positioning pins (5) and can be clamped with the clamping sections (12, 13) thereof between the hollow chamber panels (3, 3a, 3b) and the heads (6) of the positioning pins (5).

8. The cold frame according to according to any one of claims 1 to 7, **characterized in that** the positioning pins (5) are formed in one piece with the flanges (2a, 2b) of the uprights (2).

9. The cold frame according to claim 8, **characterized in that** the positioning pins (5) are moulded onto the flanges (2a, 2b) of the uprights (2).

## Revendications

1. Châssis de couche avec des éléments de paroi latérale (1) contenant des plaques alvéolaires (3, 3a, 3b) hautement transparentes, et des montants (2) pourvus de rebords latéraux (2a, 2b), dans lequel les éléments de paroi latérale (1) comportent des régions de bord latérales (1a) formées par leurs plaques alvéolaires (3, 3a, 3b) et pourvues de trous de passage (4), lesquelles reposent contre les rebords (2a, 2b) des montants (2),
- dans lequel il est prévu des dispositifs de serrage reliant les éléments de paroi latérale (1) aux montants (2), dont les éléments de serrage (7) reposent contre les faces intérieures des plaques alvéolaires (3, 3a, 3b) formant les régions de bord (1a) des éléments de paroi latérale (1) et sont serrés entre les plaques alvéolaires (3, 3a, 3b) et les têtes (6) de tiges de positionnement (5) appartenant aux dispositifs de serrage, lesquelles font saillies hors des trous de passage (4) des plaques alvéolaires (3, 3a, 3b) et sont reliées aux rebords (2a, 2b) des montants (2),
- dans lequel les tiges de positionnement (5) font saillie avec leurs nervures plates (9) sur les faces intérieures des plaques alvéolaires (3, 3a, 3b), lesquelles reposent contre les rebords (2a, 2b) des montants (2), les tiges de positionnement (5) portant des têtes (6) à leurs extrémités libres, et les éléments de serrage (7) reposant contre les faces intérieures des plaques alvéolaires (3, 3a, 3b) étant serrés entre les plaques alvéolaires (3, 3a, 3b) et les têtes (6) des tiges de positionnement (5), et
- dans lequel les éléments de serrage (7) sont pourvus de fentes allongées (10, 11) dans lesquelles sont reçus les collets des tiges de positionnement (5) formées par les nervures plates (9) des tiges de positionnement (5), et les éléments de serrage (7) étant pourvus de sections de serrage (12, 13) s'engageant sous les têtes (6) des tiges de positionnement (5),
**caractérisé en ce que**
- la liaison entre les tiges de positionnement (5) et les rebords (2a, 2b) des montants (2) est fixe.

2. Châssis de couche selon la revendication 1, **caractérisé en ce que** pour un dispositif de serrage reliant deux éléments de paroi latérale (1) à un montant (2), il est prévu un élément de serrage (7) reposant contre les faces intérieures des plaques alvéolaires (3, 3a, 3b) au niveau des deux éléments de paroi latérale (1), tout en étant serré entre les plaques alvéolaires (3, 3a, 3b) et les têtes (6) de tiges de positionnement (5) faisant saillie sur les plaques alvéolaires (3, 3a, 3b).

3. Châssis de couche selon la revendication 1, **caractérisé en ce que** pour un montant (2) disposé entre deux éléments de paroi latérale (1), il est prévu un dispositif de serrage reliant le montants (2) aux deux éléments de paroi latérale (1), lequel est pourvu d'un élément de serrage (7) présentant deux jambes de serrage (7a, 7b), celles-ci reposant respectivement contre la face intérieure des plaques alvéolaires (3, 3a, 3b) d'un élément de paroi latérale (1), tout en étant serrées entre la plaque alvéolaire (3, 3a, 3b) et une tête (6) d'une tige de positionnement (5) faisant saillie hors d'un trou de passage (4) de la plaque alvéolaire (3, 3a, 3b).

4. Châssis de couche selon la revendication 3, **caractérisé en ce que** pour un montant (2) avec deux rebords (2a, 2b) disposés perpendiculairement l'un à l'autre, il est prévu un dispositif de serrage présentant un élément de serrage (7) avec deux jambes de serrage (7a, 7b) disposées perpendiculairement l'une à l'autre, lesquelles sont respectivement serrées entre une plaque alvéolaire (3, 3a, 3b) et une tête (6) d'une tige de positionnement (5) faisant saillie hors d'un trou de passage (4) de la plaque alvéolaire (3, 3a, 3b).

5. Châssis de couche selon la revendication 4, **caractérisé en ce que** l'élément de serrage (7) pourvu de deux jambes de serrage (7a, 7b) disposées perpendiculairement l'une à l'autre présente une paroi transversale (14) reliant les deux jambes de serrage (7a, 7b) l'une à l'autre et formée comme un raidisseur.

6. Châssis de couche selon l'une des revendications 1 à 5, **caractérisé en ce que** les fentes allongées (10, 11) des éléments de serrage (7) sont conçues en forme de coin et plus larges à l'extrémité ouverte qu'à l'extrémité fermée.

7. Châssis de couche selon l'une des revendications 1 à 6, **caractérisé en ce que** les éléments de serrage (7) pourvus de fentes allongées (10, 11) peuvent être glissés, perpendiculairement aux tiges de positionnement (5), sur les tiges de positionnement (5) faisant saillie sur les faces intérieures des plaques alvéolaires (3, 3a, 3b), et serrés avec leurs sections de serrage (12, 13) entre les plaques alvéolaires (3, 3a, 3b) et les têtes (6) des tiges de positionnement (5).

8. Châssis de couche selon l'une des revendications 1 à 7, **caractérisé en ce que** les tiges de positionnement (5) sont conçues d'une seule pièce avec les rebords (2a, 2b) des montants (2).

9. Châssis de couche selon la revendication 8, **caractérisé en ce que** les tiges de positionnement (5) sont moulées sur les rebords (2a, 2b) des montants (2) .
